(19) Europäisches Patentamt
European Patent Office
Office européen des brevets

(11) **EP 2 344 698 B1**

(12) **EUROPEAN PATENT SPECIFICATION**

(45) Date of publication and mention
of the grant of the patent:
**15.02.2017 Bulletin 2017/07**

(21) Application number: **09736320.4**

(22) Date of filing: **06.10.2009**

(51) Int Cl.:
*D21H 19/82* (2006.01)     *D21H 23/48* (2006.01)
*B32B 29/08* (2006.01)

(86) International application number:
**PCT/US2009/005474**

(87) International publication number:
**WO 2010/042162 (15.04.2010 Gazette 2010/15)**

(54) **MULTILAYER COATING FOR PAPER BASED SUBSTRATE**

MEHRSCHICHTIGE BESCHICHTUNG FÜR PAPIERSUBSTRATE

REVÊTEMENT MULTICOUCHE POUR SUBSTRAT À BASE DE PAPIER

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **10.10.2008 US 195843 P**

(43) Date of publication of application:
**20.07.2011 Bulletin 2011/29**

(73) Proprietor: **Dow Global Technologies LLC
Midland, MI 48674 (US)**

(72) Inventors:
• **HARTMANN, Julia, F.**
**CH-8853 Lachen (CH)**
• **VYORYKKA, Jouko, T.**
**CH-8805 Richterswil (CH)**

(74) Representative: **Beck Greener
Fulwood House
12 Fulwood Place
London WC1V 6HR (GB)**

(56) References cited:
**EP-A- 1 416 087        WO-A-97/47702
WO-A-2005/044469        US-A1- 2004 121 079
US-A1- 2005 039 871**

## Description

The present disclosure generally relates to coated paper or paperboard, and particularly to coated paper or paperboard having a multilayer coating for oil and grease resistance properties, oxygen barrier properties, and water vapor barrier properties.

Fibrous substrates, such as paper and paperboard, are widely used in packaging operations. However, paper and paperboard can have very poor resistance to penetration by, for example, water vapor, gases, oils, solvents, and greases. To improve the resistance to penetration by such substances, paper and paperboard have been coated with a variety of materials. For many years, treatments with fluorochemicals, either by surface treatment or as a wet end additive in the paper making process, have been the dominant approach used to achieve oil and grease resistance (OGR) properties. Recent environmental concerns surrounding fluorochemicals, however, have prompted paper and paperboard manufacturers to search for alternative approaches to coating compositions that impart OGR properties to the coated paper.

Alternative approaches to impart OGR properties to coated paper have included using agents such as latexes, gelatins, starches, modified starches, and vegetable proteins. These agents, however, have been used in expensively large amounts in order to impart sufficient OGR properties. In addition, the use of such large amounts of these agents can result in treated paper and paperboard that is too stiff and/or brittle for many uses. As such, the coating materials can cause the coatings formed to fail when the coated paperboard or paper is creased and/or folded.

One approach to address the stiffness and/or brittleness of the coatings has been to incorporate high amounts of plasticizers into the coatings. While high amounts of plasticizer can help to increase the flexibility of the coatings, the high amounts of plasticizer can also result in a loss of oxygen barrier properties and a decrease in resistance to water vapor penetration, making the paper coatings ineffective for their intended purpose.

Accordingly, there is a continuing need for paper coatings that provide flexible barrier coatings on fibrous substrates having improved resistance to penetration by oil, grease, solvent, oxygen, and water vapor. US2005039871 discloses a method of producing a coated paper or paperboard, but excluding photographic papers, comprising the steps of: (a) forming a free flowing curtain comprising at least one layer, whereby the composition forming at least one layer of the free flowing curtain has a high shear viscosity of at least about 50 mPa.s, and (b) contacting the curtain with a continuous web substrate of basepaper and paperboard.

US2004121079 (A1 discloses a method of producing a coated substrate comprising the steps of: a) forming a composite, multilayer free flowing curtain, whereby the multilayer free flowing curtain comprises at least two layers imparting at least two different barrier functionalities and b) contacting the curtain with a continuous web substrate.

## Summary

The present disclosure provides embodiments of a coated paper or paperboard in which a base paper has been coated with a multilayer coating, and a method of forming the coated paper or paperboard. For the various embodiments, the multilayer coating of the coated paper or paperboard includes water vapor barrier layers that sandwich biopolymer barrier layers. For the various embodiments, the structure of the multilayer coating provides the coated paper or paperboard with improved oil and grease resistance (OGR) properties, oxygen barrier properties, and water vapor barrier properties. Surprisingly, the multilayer coating on the coated paper or paperboard also maintains its OGR properties even after the application of mechanical stress through creasing and/or folding of the coated paper or paperboard.

For the various embodiments, the coated paper or paperboard includes a base paper with the multilayer coating having a total dry coat weight of 10 grams per meter squared ($g/m^2$) or less over a first major surface. The multilayer coating is configured to have a first water vapor barrier layer, a biopolymer barrier layer on the first water vapor barrier layer, and a second water vapor barrier layer on the biopolymer barrier layer. In addition, the biopolymer barrier layer has a dry coat weight of 4 $g/m^2$ or less. Other layers can also be included in the multilayer coating.

In additional embodiments, the multilayer coating can be configured to have a first water vapor barrier layer, a first biopolymer barrier layer on the first water vapor barrier layer, a second biopolymer barrier layer on the first biopolymer barrier layer, and a second water vapor barrier layer on the second biopolymer barrier layer, where the first biopolymer barrier layer and the second biopolymer barrier layer are between the first water vapor barrier layer and the second water vapor barrier layer. Also, each of the first biopolymer barrier layer and the second biopolymer barrier layer have a dry coat weight of 2 $g/m^2$ or less.

For the various embodiments, the biopolymer barrier layer can include a biopolymer, a plasticizer, and a pigment. In some embodiments, the amount of plasticizer can be kept relatively low as compared to conventional coatings that include high levels of plasticizer in order to increase the flexibility of the coatings.

The various embodiments also include a method of forming the coated paper or paper board of the present disclosure that includes simultaneously applying a multilayer coating to a first major surface of a base paper and drying the multilayer coating on the first major surface of the base paper. The multilayer coating includes: a first water vapor barrier layer and a second water vapor barrier layer each formed from a first coating composition that is formed with a latex. The multilayer coating also includes at least one biopolymer barrier layer formed from a second coating composition that includes a biopolymer, about 2.5 to about 50 weight parts of a plasticizer for every 100 dry weight parts of biopolymer, and about 10 to about 100 weight parts of a pigment for every 100 dry weight parts of biopolymer. In addition, the biopolymer barrier layer is positioned between the first and second barrier layers.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

Definitions

As used herein, "a," "an," "the," "at least one," and "one or more" are used interchangeably. The terms "includes" and "comprises" and variations thereof do not have a limiting meaning where these terms appear in the description and claims. Thus, for example, a biopolymer barrier layer that includes "a" biopolymer can be interpreted to mean that the layer includes "one or more" biopolymers.

The term "and/or" means one, one or more, or all of the listed elements.

Also herein, the recitations of numerical ranges by endpoints include all numbers subsumed within that range (e.g., about 1 to about 5 includes 1, 1.5, 2, 2.75, 3, 3.80, 4, 5, etc.).

As used herein, the term "dry" means a substantial absence of liquids.

As used herein, the term "dry weight" refers to a weight of a dry material. For example, the solids content of the clay can be expressed as a dry weight, meaning that it is the weight of clay remaining after essentially all volatile materials (e.g., water) have been removed.

As used herein, "room temperature" refers to an ambient temperature of about 20 °C to about 25 °C.

As used herein, the term "parts" refers to parts per 100 weight parts of a total dry weight of one or more solids of the coating composition.

As used herein, an "aspect ratio" is a ratio of a longest dimension along a first axis of an individual piece of a clay to a shortest dimension along a second axis of the clay.

As used herein, "paper" and "paperboard" refers to a paper based substrate of an amalgamation of fibers that can include, at least in part, vegetable, wood, and/or synthetic fibers. As used herein, "fiberboard" refers to a material made by compressing fibers (such as those discussed herein) into sheets that are stiffer than either paper and/or paperboard. As appreciated, other components can be included in the paper based substrate of the paper and/or paperboard and/or the sheet of the fiberboard. The paper, paperboard, and/or fiberboard, as used herein, differ in their thickness, stiffness, strength, and/or weight, but are intended to be modified by the embodiments of the coating compositions and methods provided herein to form the coated paper based substrate of the present disclosure. For the present disclosure, the term "paper based substrate" encompasses and is interchangeable with the terms "paper," "paperboard," and "fiberboard" unless such a construction is clearly not intended, as will be clear from the context in which this term is used.

As used herein, "latex" refers to an aqueous suspension of polymers, which can be natural polymers, synthetic polymers, or combinations thereof.

As used herein, "biopolymer" refers to a polymeric substance derived from a biological source. As used herein, "biopolymer" refers to a group consisting of a starch, a chitosan, a polysaccharide, a protein, a gelatin, a biopolyesters and modifications and mixtures thereof.

As used herein, the term "composition" or "coating composition" is interpreted to include true liquid solutions, as well as colloidal dispersions, suspensions, emulsions, and latexes as they are conventionally defined.

As used herein, "exfoliation" refers to a process of breaking up and separating layered fillers into individual layers of the original particle.

As used herein, "mechanical stress" refers to creasing, folding, bending, rolling, and pressing paper.

As used herein, "specific surface area" refers to the total surface area per unit of mass, solid or bulk volume, or cross-sectional area of a material.

## Brief Description of the Drawings

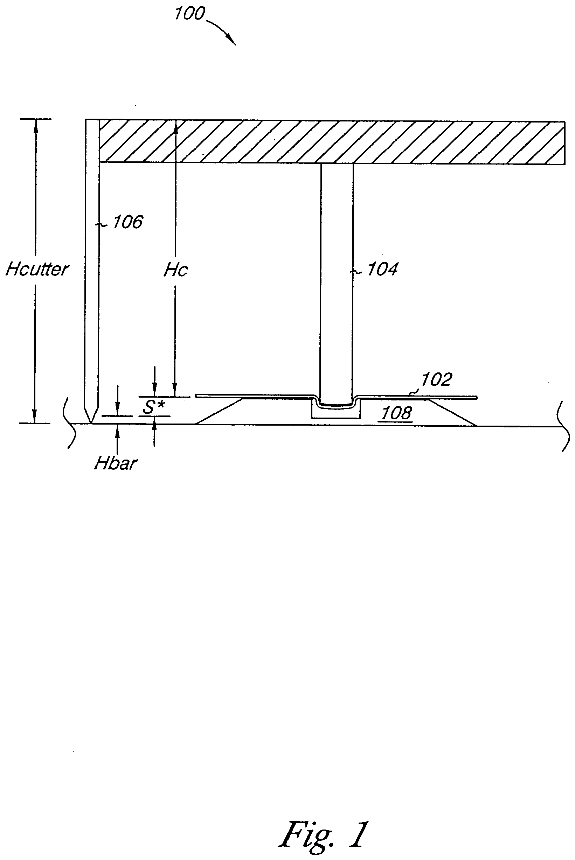

Figure 1 illustrates one embodiment of a lab creasing device used in forming crease coated base paper samples according to the present disclosure.

**Detailed Description**

Embodiments of the present disclosure provide for a coated paperboard with a multilayer coating that provides the paperboard with improved oil and grease resistance (OGR) properties and oxygen barrier properties. The term "paperboard" is used herein, however one skilled in the art will appreciate that embodiments of the present disclosure can be used with paper and/or paperboard. In addition, as discussed herein, the multilayer coating provides the paperboard with water vapor resistance as well as improved OGR properties and oxygen barrier properties.

For the various embodiments, the multilayer coating of the present disclosure includes a first water vapor barrier layer, a biopolymer barrier layer, and a second water vapor barrier layer. In various embodiments, the biopolymer barrier layer can be formed of two or more separate layers.

For the various embodiments, the method for preparing the coated paperboard includes providing the paperboard (i.e., base paper) having a first major surface and simultaneously applying a multilayer coating to the first major surface of the paperboard. As discussed herein, the multilayer coating includes a first water vapor barrier layer and a second water vapor barrier layer each formed from a first coating composition including a latex. The multilayer coating further includes at least one biopolymer barrier layer formed from a second coating composition that includes a biopolymer, about 2.5 to about 50 weight parts of a plasticizer for every 100 dry weight parts of biopolymer, and about 10 to about 100 weight parts of a pigment for every 100 dry weight parts of biopolymer. For the various embodiments, the biopolymer barrier layer is positioned between the first and second barrier layers. For the various embodiments, once applied to the paperboard, the multilayer coating is dried on the first major surface of the paperboard.

The first and second coating compositions of the multilayer coating can be applied to the paperboard to form a coating of a desired thickness and/or dry coat weight of the first water vapor barrier layer, the biopolymer barrier layer(s), and the second water vapor barrier layer by using known paper or paperboard coating techniques. Such techniques include, but are not limited to, multilayer curtain coating methods for the simultaneous coating of multiple layers as are described in WO 2004/035929, US 2003/0188839, and US 2004/0121080.

As discussed herein, the first and second water vapor barrier layers can be provided on each side of the biopolymer barrier layer. For example, the first water vapor barrier layer can be disposed on the surface of the paperboard, the biopolymer barrier layer can be disposed on the first water vapor barrier layer, and then the second water vapor barrier layer can be disposed on the biopolymer barrier layer. In other words, the first and second water vapor barrier layers can sandwich the biopolymer barrier layer. In addition, as discussed further herein, in various embodiments, the biopolymer barrier layer can consist of more than one biopolymer barrier layer.

The water vapor barrier layers formed from the first coating composition of the present disclosure can provide water vapor resistance to the paperboard and protect the biopolymer barrier layer from water absorption. For the various embodiments, the dry coat weight for each water vapor barrier layer can be in the range of 1 gram per square meter ($g/m^2$) to 10 $g/m^2$. For example, in some embodiments the dry coat weight for each water vapor barrier layer can be 3 $g/m^2$ or less, so that the first water vapor barrier layer and the second water vapor barrier layer can have a combined dry coat weight of 6 $g/m^2$ or less. In other embodiments, the dry coat weight for each water vapor barrier layer can be 5 $g/m^2$ or less. Other dry coat weights are also possible. Furthermore, the first water vapor barrier layer and the second water vapor barrier layer can have different dry coat weights with respect to each other.

In various embodiments, the first coating composition of the biopolymer barrier layer can be applied in one layer to provide a total dry coat weight of 4 $g/m^2$ or less. In other embodiments, the first coating composition of the biopolymer barrier layer can be applied in at least two layers, for example, a first biopolymer barrier layer and a second biopolymer barrier layer. In the embodiments where the biopolymer barrier layer is applied in two layers, the first biopolymer barrier layer and the second biopolymer barrier layer can each have a dry coat weight of 2 $g/m^2$ or less. In other embodiments, the first biopolymer barrier layer and second biopolymer barrier layer can each have a dry coat weight of 1 $g/m^2$ or less. In an additional embodiment, the first biopolymer barrier layer and second biopolymer barrier layer can each have a dry coat weight of about 0.5 $g/m^2$ or less. In addition, the biopolymer barrier layer can include the first and second biopolymer barrier layers having different dry coat weights. For example, the first biopolymer barrier layer can have a dry coat weight of about 2 $g/m^2$ while the second biopolymer barrier layer has a dry coat weight of about 0.5 $g/m^2$. Other dry coat weight combinations are also possible.

As discussed above, the first and second coating compositions of the multilayer coating of the present disclosure can be applied on the paperboard to provide various thicknesses and/or dry coat weights. Thus, for example, the multilayer coating can have a total dry coat weight of 10 $g/m^2$ or less, where the first water vapor barrier layer may be applied to produce a dry coat weight of 3 $g/m^2$ or less, a first biopolymer barrier layer can be applied to produce a dry coat weight of 2 $g/m^2$ or less, a second biopolymer barrier layer can be applied to produce a dry coat weight of 2 $g/m^2$ or less, and a second water vapor barrier layer can be applied to produce a dry coat weight of 3 $g/m^2$ or less.

In an alternative embodiment, the first coating composition can be applied to produce a first water vapor barrier layer having a dry coat weight of 3 $g/m^2$ or less, the second coating composition can be applied as a single layer to produce a biopolymer barrier layer having a dry coat weight of 4 $g/m^2$ or less, and the first coating composition can be applied to produce a second water vapor barrier layer having a dry coat weight of 3 g/m² or less.

Unlike embodiments of the prior art, the multilayer coating of the present disclosure includes a thin biopolymer barrier layer that can provide OGR properties and oxygen barrier properties, where the OGR properties can be retained after the paperboard has been exposed to mechanical stress. For example, as discussed more fully herein, the dried coating on the paperboard can provide an OGR barrier that has a flat Kit Rating Number of 12. As discussed herein, the Kit Rating Number is a metric given to indicate how well a surface (such as the surface of the dried coating of the coated paperboard) resists penetration by a series of reagents of increasing aggressiveness.

The multilayer coating of the present disclosure can also provide an oxygen permeability of no more than 100 cubic centimeters per meters squared ($cm^3/m^2$) a day at 23 degrees Celsius (°C), 760 millimeters mercury (mmHg), and 50 percent relative humidity. These results are more fully discussed herein in the Examples section.

Additionally, a Hot Oil Circle Test can be used to illustrate that the multilayer coating of the present disclosure can prevent penetration of canola oil at 60 °C for 24 hours through the multilayer coating and into the paperboard after exposing the coated paperboard to mechanical stress. As discussed herein, the Hot Oil Circle Test is a method to evaluate the hot-oil resistance of paper coatings.

As discussed herein, the water vapor barrier layers (e.g., the first and second water vapor barrier layers) can surround the biopolymer barrier layer and protect the biopolymer barrier layer and the paperboard from water penetration. For the various embodiments, the water vapor barrier layers can be formed from a latex and an emulsifying agent. For the various embodiments, the latex can be present in the water vapor barrier layer in an amount ranging from about 30 percent to about 100 percent of the total weight of the water vapor barrier layer. For the various embodiments, the emulsifying agent can be present in the water vapor barrier layer in a range of about 0.1 to about 2.5 weight parts based on every 100 dry weight parts of latex.

For the various embodiments, latexes that provide for good film formation without tackiness or stickiness are preferred. Examples of such latexes for use in the first coating composition can be selected from a group consisting of styrene-butadiene latexes, styrene-acrylate latexes, styrene-acrylic latexes, styrene maleic anhydrides, styrene-butadiene acrylonitrile latexes, styrene-acrylate-vinyl acrylonitrile latexes, vinyl acetate latexes, vinyl acetate-butyl acrylate latexes, vinyl acetate-ethylene latexes, acrylic latexes, vinyl acetate-acrylate latexes, acrylate copolymers, vinylidene-containing latexes, vinylidene chloride/vinyl chloride containing latexes and a mixtures thereof. Carboxylated versions of several of the above latexes are also possible, where the latexes are prepared by copolymerizing the monomers with a carboxylic acid such as, for example, acrylic acid, methacrylic acid, itaconic acid, maleic acid, fumaric acid etc. Other possible latexes for use in the first coating composition can also include those latexes described in U.S. Patents 4,468,498 and 6,896,905,.

In addition to the latexes mentioned above, the first coating composition used to form the water vapor barrier layer can include polysaccharides, proteins, polyvinyl pyrrolidone, polyvinyl alcohol, polyvinyl acetate, cellulose and cellulose derivatives, epoxyacrylates, polyester, polyesteracrylates, polyurethanes, polyetheracrylates, oleoresins, nitrocellulose, polyamide, vinyl copolymers, various forms of polyacrylates, and copolymers of vinyl acetate, (meth)acrylic acid and vinyl versatate. Further, the coating composition of the present disclosure can further include at least one or more base polymers selected from the group of thermoplastic resins including homopolymers and copolymers (including elastomers) of an alpha-olefin such as ethylene, propylene, 1-butene, 3-methyl-1-butane, 4-methyl-1-pentene, 3-methyl-1-pentene, 1-heptene, 1-hexene, 1-octene, 1-decene, and 1-dodecene as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butane copolymer, and propylene-1-butene copolymer; copolymers (including elastomers) of an alpha-olefin with a conjugated or non-conjugated diene as typically represented by ethylene-butadiene copolymer and ethylene-ethylidene norbornene copolymer; and polyolefins (including elastomers) such as copolymers of two or more I alpha-olefins with a conjugated or non-conjugated diene as typically represented by ethylene-propylene-butadiene copolymer, ethylene-propylene-dicyclopentadiene copolymer, ethylene-propylene-1,5-hexadiene copolymer, and ethylene-propylene ethylidene norbornene copolymer; ethylene-vinyl compound copolymers such as ethylene-vinyl acetate copolymer, ethylene-vinyl alcohol copolymer, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, ot-methylstyrene-styrene copolymer; and styrene block copolymers (including elastomers) such as styrene-butadiene copolymer and hydrate thereof, and styrene-isoprene-styrene triblock copolymer; polyvinyl compounds such as polyvinyl chloride, polyvinylidene chloride, vinyl chloride vinylidene chloride copolymer, polymethyl acrylate, and polymethyl methacrylate; polyamides such as nylon 6, nylon 6,6, and nylon 12; thermoplastic polyesters such as polyethylene such as nylon 6, nylon 6,6, and nylon 12; thermoplastic polyesters such as polyethylene terephthalate and polybutylene terephthalate; polycarbonate, polyphenylene oxide, and the like. These resins may be used either alone or in combinations of two or more. Additionally, olefin block copolymers, such as those described in International Patent Application No. WO 2005/090427 and U.S. Patent Application Serial No. 11/376,835, may also be used as a base polymer. As used herein, the term "copolymer" refers to a polymer formed of two or more comonomers.

In particular embodiments, polyolefins such as polypropylene, polyethylene, copolymers thereof, and blends thereof, as well as ethylene-propylene-diene terpolymers can be the base polymer included in the coating composition. The coating composition can also include at least one or more stabilizing agent and a fluid medium for forming the coating composition.

For the various embodiments, the emulsifier included in the first coating composition to form the water vapor barrier layer can be an anionic emulsifier. Suitable anionic emulsifiers include the alkyl aryl sulfonates, alkali metal alkyl sulfates, the sulfonated alkyl esters, and fatty acid soaps. Specific examples include sodium dodecylbenzene sulfonate, sodium butylnaphthalene sulfonate, sodium lauryl sulfate, disodium dodecyl diphenyl ether disulfonate, N-octadecyl sulfosuccinate and dioctyl sodiumsulfosuccinate.

The emulsifier can also be nonionic. Suitable nonionic emulsifiers include polyoxyethylene condensates. Exemplary polyoxyethylene condensates that can be used include polyoxyethylene aliphatic ethers, such as polyoxyethylene lauryl ether and polyoxyethylene oleyl ether; polyoxyethylene alkaryl ethers, such as polyoxyethylene nonylphenol ether and polyoxyethylene octylphenol ether; polyoxyethylene esters of higher fatty acids, such as polyoxyethylene laurate and polyoxyethylene oleate, as well as condensates of ethylene oxide with resin acids and tall oil acids; polyoxyethylene amide and amine condensates such as N-polyoxyethylene lauramide, and N-lauryl-N-polyoxyethylene amine and the like; and polyoxyethylene thio-ethers such as polyoxyethylene n-dodecyl thio-ether.

Various protective colloids may also be used in place of emulsifying or stabilizing agents in the first coating composition used to form the water vapor barrier layers. Suitable colloids include casein, hydroxyethyl starch, carboxyxethyl cellulose, carboxymethyl cellulose, hydroxyethylcellulose, gum arabic, alginate, poly(vinyl alcohol), polyacrylates, polymethacrylates, styrene-maleic anhydride copolymers, polyvinylpyrrolidones, polyacrylamides, polyethers, and the like, as known in the art of emulsion polymerization technology. In general, when used, these colloids are used at levels of 0.05 percent to 10 percent by weight based on the total weight of the emulsion polymerization reactor contents.

The water vapor barrier layers can also include a pigment, where each of the first water vapor barrier layer and the second water vapor barrier layer can have about 0 to about 100 weight parts pigment for every 100 dry weight parts of latex. For the various embodiments, the pigment used in the water vapor barrier layer can be selected from a group consisting of clay, calcined clay, an exfoliated natural layered silicate, a partially exfoliated natural layered silicate, exfoliated synthetic layered silicate, a partially exfoliated synthetic layered silicate, ground calcium carbonate, precipitated calcium carbonate, calcium sulphate, aluminium hydroxide, aragonite, barium sulphate dolomite, magnesium hydroxide, magnesium carbonate, magnesite titanium dioxide (e.g. rutile and/or anatase), satin white, zinc oxide, silica, alumina trihydrate, mica, diatomaceous earth, aragonite, calcite, vaterite, talc and mixtures thereof. Further, plastic pigments can be present in the coating compositions. Examples of plastic pigments are polystyrene latexes where the amount of polystyrene is about 70 percent to about 100 percent of the total weight of the plastic pigment.

In some embodiments, the pigment used in the water vapor barrier layers can be a clay. Inclusion of clay can serve to, among other things, improve barrier properties, reduce blocking, and reduce the total cost of the coating composition for the water vapor barrier layers. Possible effects from the addition of clay to the water vapor barrier layers include, but are not limited to, a sealing effect on the surface of the water vapor barrier layer, a reduction in the portion of permeable material in the water vapor barrier layer, and/or increasing the diffusion path for water vapor molecules, and thus delaying their penetration through the water vapor barrier layer. Further, the water vapor barrier layers can contain other additives, such as cross-linkers, waxes, dispersants, and/or plasticizers to enhance the barrier properties, recyclability or flexibility.

As discussed herein, the biopolymer barrier layer of the multilayer coating can provide good OGR properties and oxygen barrier properties. For the various embodiments, the biopolymer barrier layer of the present disclosure can include a biopolymer, a plasticizer, and a pigment, among other elements.

As discussed herein, since biopolymers can form brittle coatings, coatings in the prior art have included high amounts of plasticizer to increase the flexibility of the biopolymer barrier layer. In contrast, the biopolymer barrier layer of the present disclosure includes a relatively low amount of plasticizer while still providing enough flexibility to the biopolymer barrier layer to prevent cracking when the paperboard is subjected to mechanical stresses.

For the various embodiments, the plasticizer can be present in the biopolymer barrier layer in a range of from about 2.5 to about 50 weight parts for every 100 dry weight parts of biopolymer. For the various embodiments, the plasticizer used in the biopolymer barrier layer of the present disclosure can be an ethylene acrylic acid copolymer. Examples of suitable plasticizers include those with molecular weights that range from about 50 to about 40,000.

For the various embodiments, the biopolymer can be present in the biopolymer barrier layer in an amount from about 50 percent to about 100 percent of the total weight of the biopolymer barrier layer. For the various embodiments, the biopolymer used in the biopolymer barrier layer of the present disclosure can be a starch. Alternatively, the biopolymer can be selected from a group including a starch, a modified starch, a chitosan, a polysaccharide, a protein, a gelatin, a biopolyester, and modifications and mixtures thereof. As used herein, a modified starch includes those starches that have been structurally and/or chemically modified to be different than the starch as is was structurally and/or chemically before the modification.

In various embodiments, the pigment included in the biopolymer barrier layer can be selected from a group consisting of clay, calcined clay, an exfoliated natural layered silicate, a partially exfoliated natural layered silicate, exfoliated synthetic layered silicate, a partially exfoliated synthetic layered silicate, ground calcium carbonate, precipitated calcium carbonate, calcium sulphate, aluminium hydroxide, aragonite, barium sulphate dolomite, magnesium hydroxide, magnesium carbonate, magnesite titanium dioxide (e.g. rutile and/or anatase), satin white, zinc oxide, silica, alumina trihydrate, mica, diatomaceous earth, aragonite, calcite, vaterite, talc and mixtures thereof. Further, plastic pigments can be present in the coating compositions. Examples of plastic pigments are polystyrene latexes where the amount of polystyrene is about 70 percent to about 100 percent of the total weight of the plastic pigment.

As discussed herein, in some embodiments, the pigment used in the second coating composition of the biopolymer barrier layer can be a clay. In such embodiments, the clay can have an average particle size of 97 percent smaller than 2 micrometers ($\mu$m), an aspect ratio of approximately 30, and a specific surface area of about 20 m$^2$/g. In some embodiments, the aspect ratio can range from about 30 to about 50. In addition, the clay can have a specific surface area of up to about 330 m$^2$/g. In an additional embodiment, the aspect ratio of the pigment can be greater than 30, while still having a size small enough to provide a specific surface area of up to about 330 m$^2$/g.

In some embodiments, the pigment can be present in the biopolymer barrier layer in an amount of about 10 to about 100 weight parts for every 100 dry weight parts of biopolymer.

In some embodiments, the first and second coating compositions can optionally include additional components (either in suspension or dissolved therein) for enhancing and/or producing a desired coating rheological property and/or finished coating property. Such additional components can include, but are not limited to, binders, dispersing agents, protective colloids, solvents for the colloids, sequestering agents, thickeners, humectants, lubricants, surfactants, wetting agents, crosslinkers, anti-foaming agents, and the like.

In addition, the surfactants, wetting agents, anti-foaming agents, dispersing agents, and/or leveling agents optionally included in the first and second coating compositions can be anionic, cationic, and/or nonionic. As one skilled in the art will appreciate, the amount and number of surfactants, wetting agents, anti-foaming agents, dispersing agents, and/or leveling agents added to the first and/or second coating compositions will depend on the particular compound(s) selected, but should be limited to an amount that is necessary to achieve wetting of the substrate while not compromising the performance of the dried coating. For example, in some embodiments, the surfactant amounts can be less than or equal to about 10 percent by weight of the first coating composition or the second coating composition.

The multilayer coating of the present disclosure may be used as at least one coating on a coated paperboard. For example, the multilayer coating of the present disclosure could be used as the only coating on the paperboard. In an additional embodiment, the multilayer coating of the present disclosure could be used as one of a base coat, a top coat, and/or one or more intermediate coatings between a base coat and a top coat of a coated paperboard. Therefore, the multilayer coating of the present disclosure may be incorporated with other layers that can enhance and/or produce a desired coating property.

As discussed herein, the multilayer structure of the present disclosure can be used for paper and/or non-paper coating applications that require barrier properties such as, for example, a water barrier and/or a moisture barrier in food packaging.

EXAMPLES

Various aspects of the present disclosure are illustrated, but not limited, by the following examples. It is to be understood that the particular examples, materials, amounts, and procedures are to be interpreted broadly in accordance with the scope of the disclosure as set forth herein. Unless otherwise indicated, all parts and percentages are by weight and all molecular weights are number average molecular weight. Unless otherwise specified, all instruments and chemicals used are commercially available as indicated herein. The following materials are used in the examples.

Clay: Contour Xtreme Clay (Imerys Pigments for Paper), having an average particle size of 97 percent < 2 $\mu$m and an aspect ration of approximately 30, with a specific surface area of 20 meters squared per gram (m$^2$/g).
Starch: Perlcoat 155 starch (Lyckeby Starkelsen Group, Sweden Company).
Plasticizer: Tecseal E799-35 (Trueb Emulsions Chemie AG, Switzerland).
Latex DL 930 (The Dow Chemical Company, Midland MI, USA
Emulsifier: Emulsogen SF 8 (Clairant Chemical Company).
Paper Based Substrate: Coated natural kraft paper board with higher flexibility with a thickness of 340 $\mu$m and a PPS roughness of 3.5 $\mu$m.

The oil used is Canola oil.
All measurements and procedures for the Examples are conducted at room temperature of about 23 degrees Celsius (°C), unless indicated otherwise.

Coating Compositions and Coated Paper Based Substrates

*Preparation of the Water Vapor Barrier Layer Coating Composition F1*

The water vapor barrier layer coating composition is prepared by combining 0.5 grams (g) dry weight of Emulsogen SF 8 (about 50 percent solids) and 100 g dry weight of DL 930 latex (about 50 percent solids). This coating composition is referred to in the following tables as F1.

*Preparation of the Biopolymer Barrier Layer Coating Composition F2*

The biopolymer barrier layer coating composition is prepared by combining 100 g dry weight of Contour Xtreme Clay (about 68.4 percent solids), 100 g dry weight of Perlcoat 155 starch (about 32.0 percent solids), and 2.5 g dry weight of Tecseal E799-35 (about 35.0 percent solids). This coating composition is referred to in the following tables as F2.

*Preparation of the Biopolymer Barrier Layer Coating Composition F3*

The biopolymer barrier layer coating composition is prepared with 100 g dry weight of Perlcoat 155 starch (about 32.0 percent solids) and 2.5 g dry weight of Tecseal E799-35 (about 35.0 percent solids). This coating composition is referred to in the following tables as F3.

*Preparation of the Water Vapour Barrier Layer Coating Composition F4*

The water vapor barrier layer coating composition is prepared by combining 100 g dry weight of Contour Xtreme Clay (about 68.4 percent solids) 100 g dry weight of DL 930 latex (about 50 percent latex), and 0.50 g dry weight of Emulsogen SF8 (about 50 percent solids). This coating composition is referred to in the following tables as F4.

Multilayer Curtain Coating Settings

For the following Examples the coating compositions are coated onto the surface of coated natural kraft paper board (the paper substrate) to form a "coated base paper." A laboratory Multi Layer Curtain Coating (MLCC) station coater is used for the coating, and adjustments are made to obtain the desired dry coat weight for each sample. The laboratory MLCC station coater has an 8 layer slide die, a speed of 100 to 2000 meters per minute (m/min), a width of 280 millimeters (mm), and infrared (IR) and airfoils for drying.

Preparation of Samples 1-7

Each Sample of the coated base paper consists of the paper substrate, an under layer, two middle layers and a top layer or coating. The under layer and top layer are formed using the water vapor barrier layer coating composition F1, and the middle layers are formed using the biopolymer barrier layer composition F2. The under layer correlates to the first water vapor barrier layer, the middle layer(s) correlate to the biopolymer barrier layer (e.g. first and second biopolymer barrier layer, or the single biopolymer barrier layer), and the upper layer correlates to the second water vapor barrier layer. In the examples, the coating compositions used to form the layers remain constant and the dry coat weights of the various layers change. The Samples are coated with the laboratory MLCC station coater.

Sample 1

Table 1: Sample 1 with biopolymer barrier layers of 3 $g/m^2$ each and water vapor barrier layers of 5 $g/m^2$

| Composition | F1 | F2 | F2 | F1 |
|---|---|---|---|---|
| Name of Sample | Sample 1 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |

(continued)

| Composition | F1 | F2 | F2 | F1 |
|---|---|---|---|---|
| Name of Sample | Sample 1 | | | |
| Layers | Under Layer | Middle Layer | Middle Layer | Top Layer |
| DL930 | 100 g | | | 100 g |
| Emulsogen SF8 | 0.5 g | | - | 0.5 g |
| Dry coat weight (g/m$^2$) | 5 | 3 | 3 | 5 |

Sample 2

Table 2: Sample 2 with biopolymer barrier layers of 3 g/m$^2$ and a variation of the water vapor barrier layers with the under layer at 5 g/m$^2$ and the top layer at 10 g/m$^2$

| Composition | F1 | F2 | F2 | F1 |
|---|---|---|---|---|
| Name of Sample | Sample 2 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$) | 5 | 3 | 3 | 10 |

Sample 3

Table 3: Sample 3 with biopolymer barrier layers of 2 g/m$^2$ each and water vapor barrier layers of 3 g/m$^2$

| Composition | F1 | F2 | F2 | F1 |
|---|---|---|---|---|
| Name of Sample | Sample 3 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$) | 3 | 2 | 2 | 3 |

Sample 4

Table 4: Sample 4 with biopolymer barrier layers of 3 g/m$^2$ and a variation of the water vapor barrier layers with the under layer at 10 g/m$^2$ and the top layer at 5 g/m$^2$

| Composition | F1 | F2 | F2 | F1 |
|---|---|---|---|---|
| Name of Sample | Sample 4 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$) | 10 | 3 | 3 | 5 |

Sample 5

Table 5: Sample 5 with biopolymer barrier layers of 3 g/m$^2$ each and water vapor barrier layers of 3 g/m$^2$ each

| Composition | F1 | F2 | F2 | F1 |
|---|---|---|---|---|
| Name of Sample | Sample 5 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$) | 3 | 3 | 3 | 3 |

Sample 6

Table 6: Sample 6 with biopolymer barrier layers of 5 g/m$^2$ and water vapor barrier layers at 5 g/m$^2$ each

| Composition | F1 | F2 | F2 | F1 |
|---|---|---|---|---|
| Name of Sample | Sample 6 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$ ) | 5 | 5 | 5 | 5 |

Sample 7

Table 7: Sample 7 with biopolymer barrier layers at 10 g/m$^2$ each and water vapor barrier layers at 3 g/m$^2$ each

| Composition | F1 | F2 | F2 | F1 |
|---|---|---|---|---|
| Name of Sample | Sample 7 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$) | 10 | 3 | 3 | 10 |

Samples 8-15

To further analyze the effects of the location of the clay, the following Samples are prepared. Each Sample of the coated base paper consists of a paper substrate, an under layer, one or two middle layers, and a top layer of formed with the coating compositions to form the coated base papers. The under layer and top layer are formed with the water vapor barrier layer coating compositions F1 or F4, discussed above. The middle layer(s) is formed with the biopolymer barrier layer coating composition F2 or F3, from above. In the examples, the layers formed with the coating compositions remain constant and the dry coat weights of the various layers change. The Samples are coated with the laboratory MLCC station coater as discussed herein.

Sample 8

Table 8: Sample 8 with two water vapor barrier layers at 6 g/m$^2$ each

| Composition | F1 | F1 |
|---|---|---|
| Name of Sample | Sample 8 | |
| Layers | Under Layer | Top Layer |
| Contour Xtreme Clay | | |
| Perlcoat 155 starch | | |
| Tecseal E799-35 | | |
| DL930 | 100 g | 100 g |
| Emulsogen SF8 | 0.5 g | 0.5 g |
| Dry coat weight (g/m$^2$) | 6 | 6 |

Sample 9

Table 9: Sample 9 with one biopolymer barrier layer at 4 g/m$^2$ and a water vapor barrier layers at 3 g/m$^2$

| Composition | F1 | F2 | F1 |
|---|---|---|---|
| Name of Sample | Sample 9 | | |
| Layers | Under Layer | Middle Layer | Top Layer |
| Contour Xtreme Clay | | 100 g | |
| Perlcoat 155 starch | | 100 g | |
| Tecseal E799-35 | | 2.5 g | |
| DL930 | 100 g | | 100 g |
| Emulsogen SF8 | 0.5 g | | 0.5 g |
| Dry coat weight (g/m$^2$) | 3 | 4 | 3 |

Sample 10

Table 10: Sample 10 with biopolymer barrier layers at 2g/m$^2$ each and water vapor barrier layers at 3 g/m$^2$

| Composition | F1 | F2 | F2 | F1 |
|---|---|---|---|---|
| Name of Sample | Sample 10 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$) | 3 | 2 | 2 | 3 |

Sample 11

Table 11: Sample 11 with biopolymer barrier layers at 2 g/m$^2$ each and water vapor barrier layers at 5 g/m$^2$ each

| Composition | F1 | F2 | F2 | F1 |
|---|---|---|---|---|
| Name of Sample | Sample 11 | | | |
| Layers | Under Layer | Middle Layer | Middle Layer | Top Layer |
| Contour Xtreme Clay | | 100 g | 100 g | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 | | | 0.5 |
| Dry coat weight (g/m$^2$) | 5 | 2 | 2 | 5 |

Sample 12

Table 12: Sample 12 with biopolymer barrier layers at 2 g/m$^2$ each and water vapor barrier layers at 3 g/m$^2$ each

| Composition | F1 | F3 | F3 | F1 |
|---|---|---|---|---|
| Name of Sample | Sample 12 | | | |
| Layers | Under Layer | Middle Layer | Middle Layer | Top Layer |
| Contour Xtreme Clay | | | | |
| Perlcoat 155 starch | | 100 g | 100 g | |
| Tecseal E799-35 | | 2.5 g | 2.5 g | |
| DL930 | 100 g | | | 100 g |
| Emulsogen SF8 | 0.5 g | | | 0.5 g |
| Dry coat weight (g/m$^2$) | 3 | 2 | 2 | 3 |

Sample 13

Table 13: Sample 13 with biopolymer barrier layers at 6 g/m$^2$ each.

| Composition | F4 | F3 |
|---|---|---|
| Name of Sample | Sample 13 | |
| Layers | Under Layer | Top Layer |
| Contour Xtreme Clay | 100 g | |
| Perlcoat 155 starch | | |
| Tecseal E799-35 | | |
| DL930 | 100 g | 100 g |
| Emulsogen SF8 | 0.5 g | 0.5 g |
| 2 Dry coat weight (g/m$^2$) | 6 | 6 |

Sample 14

Table 14: Sample 14 with biopolymer barrier layers at 2 g/m$^2$ each and water vapor barrier layers at 3 g/m each, but using F4 as the under layer.

| Composition | F4 | F3 | F3 | F1 |
|---|---|---|---|---|
| Name of Sample | Sample 14 | | | |
| Layers | Under Layer | Middle Layer | Middle Layer | Top Layer |
| Contour Xtreme Clay | 100 g | | | |
| Perlcoat 155 starch | | 100 g | 100 g | |
| Tecseal E799-35 | | 2.5 g | 2.5 g | |
| DL930 | 100 g | | | 100g |
| Emulsogen SF8 | 0.5 g | | | 0.5 g |
| Dry coat weight (g/m$^2$) | 3 | 2 | 2 | 3 |

Sample 15

Table 15: Sample 15 with water vapor barrier layer and biopolymer barrier layers at 6 g/m$^2$ each.

| Composition | F4 | F3 |
|---|---|---|
| Name of Sample | Sample 15 | |
| Layers | Under Layer | Top Layer |
| Contour Xtreme Clay | 100 g | |
| Perlcoat 155 starch | | 100 |
| Tecseal E799-35 | | 2.5 g |
| DL930 | 100 g | |
| Emulsogen SF8 | 0.5 g | |
| Dry coat weight (g/m$^2$) | 6 | 6 |

Flat Kit Test

Grease and oil kit testing liquids are made according to formulas shown in Table 16. Castor oil (USP Grade 99-100%), toluene (ACS Grade, 99.5% min. by gas chromatography), heptane (Reagent grade, 99.9% min. with 99.0% n-heptane) are purchased from VWR International.

Table 16: Composition of Kit Test Liquids

| Kit # | 1 | 2 | 3 | 4 | 5 | 6 | 7 | 8 | 9 | 10 | 11 | 12 |
|---|---|---|---|---|---|---|---|---|---|---|---|---|
| Castor Oil (g) | 100 | 90 | 80 | 70 | 60 | 50 | 40 | 30 | 20 | 10 | 0 | 0 |
| Toluene (g) | 0 | 5 | 10 | 15 | 20 | 25 | 30 | 35 | 40 | 45 | 50 | 45 |
| Heptane (g) | 0 | 5 | 10 | 15 | 20 | 25 | 30 | 35 | 40 | 45 | 50 | 55 |

The oil and grease resistance "Kit Test" is performed on the samples of the Samples 8-14 according to TAPPI UM 557 "Repellency of Paper and Board to Grease, Oil, and Waxes (Kit Test)." The Kit Test is a procedure for testing the degree of repellency of paper or paperboard having a coating, such as the coated base paper of the present disclosure.
The Kit Test is conducted as follows. Obtain five representative samples (5.08 cm x 5.08 cm) of each of the coated base papers. Deposit one drop of the Kit Rating Number test reagent onto a flat surface of the coated base paper having the coating composition of the present disclosure from a height of 2.54 cm. After 15 seconds, wipe away the excess Kit Rating Number test reagent with a clean tissue or cotton swatch. Immediately examine the surface of the coated base paper.
The coated base paper is assigned a failure if the test surface shows a pronounced darkening as compared to an untested coated base paper. If, however, the coated base paper passes, repeat the above described test with a new sample of coated base paper with the next higher Kit Rating Number test reagent until a failure Kit Rating Number test reagent is found. The average of the five highest passing Kit Rating Number test reagent rounded to the nearest 0.5 is reported as the flat Kit Rating Number for the coating composition on the coated base paper. Test results are shown in Table 17 below.

Table 17: Flat Kit Rating Test Results

| Sample | Flat Kit Rating Number |
|---|---|
| Sample 8 | 5 |
| Sample 9 | 12 |
| Sample 10 | 12 |
| Sample 11 | 12 |

(continued)

| Sample | Flat Kit Rating Number |
|---|---|
| Sample 12 | 12 |
| Sample 13 | 5 |
| Sample 14 | 12 |

Hot Oil Circle Test

The Hot Oil Circle Test is developed by The Dow Chemical Company to evaluate the hot-oil resistance of coating compositions. The oil and grease resistance of the coated base paper is tested on a mechanically stressed samples of the coated base paper. The hot oil resistance test is conducted at 60 °C in order to accelerate the oil penetration rate into the coated base paper. The testing procedure is as follows.
Collect samples of the coated base paper (8 cm x 8 cm). A minimum of two samples per test is required. A creasing procedure is used to form a crease in the coated paper, which forms the mechanically stressed samples of the coated base paper. The creasing procedure is performed with a lab creasing device (Marbach Werkzeugbau). Figure 1 illustrates portions of the lab creasing device 100 used in forming the crease coated base paper samples of the present test. The crease height ($H_c$) formed with the lab creasing device 100 is calculated using the following formula.

$$H_c = H_{cutter} - H_{bar} - s^*$$

where

$H_c$ represents the height of the creaser 104;
$H_{cutter}$ represents the height of the cutter 106;
$H_{bar}$ represents the height of the counterplate 108 under the creaser 104; and
$s^*$ represents the thickness of the coated base paper in its mechanically stressed state.
(Information from "Praktikumsversuch Nr. 2: Stanzen, Rillen, und Falten von Faltschachtel Karton" Prof. Hofer of Univerisity of Applied Science, Munich.)

The lab creasing device 100 has an $H_{cutter}$ equal to 23.8 mm and an $H_{bar}$ equal to 0.1 mm. The value of $s^*$ is equal to (s)(1-p), where s is the thickness of the coated base paper sample having a value of approximately 0.37 mm, and p is a compression value for the coated base paper sample 102. The value for p depends on the compressibility of the coated base paper sample 102, where to avoid destruction of the sample 102 in the lab creasing device 100 a value of p = 0.1 is chosen. For the present examples, the height of the creaser 104 is calculated to be 23.35 mm.
In order to effectively crease the coated paper samples, a crease height is used to calculate which creasing dressing can be used to crease the coated paper samples without cutting the samples. In addition, the calculation of a counterplate is necessary to avoid cutting the sample and to produce defined creases that are reproducible. For the choice of the creasing dressing, the effective width of the depression, $b_N$ and depression in the counterplate, $t_N$ are determined. As guide values for $b_N$ and $t_N$ the following can be assumed:

Machine direction of the paper (MD):

$$b_N = 1.5 \times s + b_M$$

Cross direction of the paper (CD);

$$b_N = 1.5 \times s + b_M + 0.1\ m$$

where

s is the thickness of the coated based paper; and
$b_M$ is the width of the creaser 104, which has a value of 0.7 mm.

Once the MD $b_N$, and CD $b_N$ are calculated, the two can be used to select the appropriate creasing dressing, Nr. Using Table 18 below, the Nr is chosen where the $b_N$ value is equal to $b_{N2}$. For example, if $b_N$ is equal to 1.2, an Nr equal to 1 is used, if $b_N$ is equal to 1.3, an Nr equal to 3 is used. In addition, by using Table 18 to determine the Nr to use from the $b_N$, the $t_N$ is also provided. With this method, creasing is defined and gives reproducible results.

Table 18: Available creasing dressings

| Nr | $t_N$ (mm) | $b_{N1}$ (mm) | $b_{N2}$ (mm) | $b_{N3}$ (mm) | $b_{N4}$ (mm) |
|---|---|---|---|---|---|
| 1 | 0.40 | 1.10 | 1.20 | 1.30 | 1.40 |
| 2 | 0.40 | 1.40 | 1.50 | 1.60 | 1.70 |
| 3 | 0.45 | 1.20 | 1.30 | 1.40 | 1.50 |
| 4 | 0.50 | 1.30 | 1.40 | 1.50 | 1.60 |
| 5 | 0.50 | 1.50 | 1.60 | 1.70 | 1.80 |
| 6 | 0.55 | 1.50 | 1.60 | 1.70 | 1.80 |
| 7 | 0.60 | 1.40 | 1.50 | 1.60 | 1.70 |
| 8 | 0.60 | 1.90 | 2.00 | 2.10 | 2.20 |

In this case the calculated effective width and height of the creasing dressing is: s, or $t_N$, is equal to 0.37 mm, $b_M$ is equal to 0.7, $b_N$ (CD) is equal to 1.348 mm, and $b_N$ (MD) is equal to 1.248mm. Due to the sample thickness of 0.37 mm, Nr equal to 1 or 2 are the only options. However, the average $b_N$ value is equal to 1.298, using the average of $b_N$ (CD) and $b_N$ (MD), therefore since Nr equal to 1 includes a $b_N$ value closest to 1.298, the Nr is equal to 1.

Once the coated base paper samples have been creased, the creased base paper samples are folded, unfolded, and taped (e.g., in a flat state) onto Plexiglas® with the coated side of the coated base paper facing up. A circle template is used to draw a 6.0 cm diameter circle around the middle of the creased coated base paper samples. A hot glue gun is then used to deposit a bead of glue along the circle to create a "glue dam." The glue dam is allowed to cool and harden for a minimum of 15 minutes at room temperature.

Pre-heated canola oil is removed from an oven at 60 °C, and 1 ml is applied to the initially creased and folded coated base paper in the area defined by the glue dam. It is necessary that the oil spreads to cover the entire circle. A picture is taken of the oil-covered sample to help with interpretation of results. The oil-covered sample is then placed into the oven at 60 °C. After a scheduled time interval (here, after 11 hours), the samples of the creased coated base paper are removed from the oven and placed on a lab bench to cool to room temperature. Pictures of the creased coated base paper samples are taken with and without oil. The results for some of the Samples are shown in Tables 19 and 20.

Table 19: Sample Oil and Grease Penetration Data for Creased Coated Base Paper Samples 1-6

|  | Oil Penetration | No Oil Penetration | Number of Tests |
|---|---|---|---|
| Sample 1 | 7 | 1 | 8 |
| Sample 2 | 8 |  | 8 |
| Sample 3 |  | 8 | 8 |
| Sample 4 | 5 |  | 5 |
| Sample 5 | 4 | 4 | 8 |
| Sample 6 | 8 |  | 8 |
| Total Samples |  |  | 45 |

Samples 1- 6 show that only 13 of the 45 creased samples show no penetration of hot oil after 24 hours. Only the multilayer structure with the lowest total dry coat weight (Sample 3 creased) passed the test by 100 percent. Below is the statistical information for Samples 1-6.

Table 20: Statistical Data for Sample Oil & Grease Penetration Data For Creased Coated Base Paper Samples

| Name | n | Mean ($\mu$) | Standard deviation ($\delta$) | Confidence interval for $\mu$ (95 %) | | Confidence Interval for $\delta$ (98 %) | |
|---|---|---|---|---|---|---|---|
| Sample 1 | 8 | 7.875 | 0.365 | 7.57 | 8.18 | 0.28 | 0.87 |

(continued)

| Name | n | Mean (μ) | Standard deviation (δ) | Confidence interval for μ (95 %) | | Confidence Interval for δ (98 %) | |
|---|---|---|---|---|---|---|---|
| Sample 2 | 8 | 8 | 0 | 8 | | 0 | |
| Sample 3 | 8 | 7 | 0 | 7 | | 0 | |
| Sample 4 | 5 | 8 | 0 | 8 | | 0 | |
| Sample 5 | 8 | 7.5 | 0.535 | 7.05 | 7.95 | 0.41 | 1.27 |
| Sample 6 | 8 | 8 | 0 | δ | | 0 | |

The above described Hot Oil Circle test is also performed on Samples 8-15. The results are shown in Tables 21 and 22.

Table 21: Sample Oil and Grease Penetration Data for Creased Coated Base Paper Samples 8-15

| | Oil Penetration | No Oil Penetration | Number of Tests |
|---|---|---|---|
| Sample 8 | 16 | | 16 |
| Sample 9 | 3 | 13 | 16 |
| Sample 10 | | 16 | 16 |
| Sample 11 | 4 | 12 | 16 |
| Sample 15 | 12 | | 12 |
| Sample 12 | 3 | 13 | 16 |
| Sample 13 | 11 | 1 | 12 |
| Sample 14 | 15 | 1 | 16 |
| Uncoated | 8 | | 8 |
| Total Samples | | | 127 |

Samples 8-15 show that 56 of the 127 samples pass the oil and grease test without penetration. The samples with good oil and grease resistance after creasing are Samples 10, 12, and 11. Below is the statistical information for the tests (Samples 8-15).

Table 22: Main Trial Test Statistical information

| Name | N | Mean (μ) | Standard deviation (δ) | Confidence interval for [μ (95 %) * | | Confidence Interval for δ (98 %) | |
|---|---|---|---|---|---|---|---|
| Sample 8 | 16 | 8 | 0 | 8 | | 0 | |
| Sample 9 | 16 | 7.19 | 0.40 | 6.98 | 7.4 | 0.28 | 0.68 |
| Sample 10 | 16 | 7 | 0 | 7 | | 0 | |
| Sample 11 | 16 | 7.25 | 0.45 | 7.01 | 7.49 | 0.32 | 0.76 |
| Sample 15 | 12 | 8 | 0 | 8 | | 0 | |
| Sample 12 | 16 | 7.19 | 0.40 | 6.98 | 7.4 | 0.28 | 0.68 |
| Sample 13 | 12 | 7.92 | 0.29 | 7.74 | 8.10 | 0.17 | 0.55 |
| Sample 14 | 16 | 7.93 | 0.26 | 7.79 | 8.07 | 0.20 | 0.44 |

(continued)

| Name | N | Mean ($\mu$) | Standard deviation ($\delta$) | Confidence interval for [$\mu$ (95 %) * | Confidence Interval for $\delta$ (98 %) |
|---|---|---|---|---|---|
| Uncoated board | 8 | 8 | 0 | 8 | 0 |
| * Assumption: Normal distribution of OGR, independent samples | | | | | |

Oxygen Transmission Rate Testing

The oxygen transmission rate measurement is performed on Samples 8-14. The oxygen permeability is measured using a measuring apparatus (Model OX-TRAN Model 2/21, manufactured by Mocon, Inc.) at a temperature of 23 °C and a relative humidity (RH) of 50 percent. Within this instrument, each measurement unit is composed of two cells, which are separated by the sample. In one cell carrier gas (nitrogen) is routed, where the other cell is flushed with a test gas (oxygen). Both gases have a defined temperature and RH. After the measurement is started, oxygen is allowed to enter the Coulox sensor. This sensor, when exposed to oxygen, generates an electrical current which is proportional to the amount of oxygen entered. The results for the oxygen transmission test are presented in Table 23.

Table 23: Results of Oxygen Transmission Measurement of Samples of Main Trial

| Sample | Number of repetitions of dependent pairs | Transmission Rate [cc /($m^2$ * day)] | Standard deviation [cc /($m^2$ * day)] |
|---|---|---|---|
| Sample 8 | 1 | Measurement failed, > 200 | - |
| Sample 8 † | 2 | Measurement failed, > 1000 | - |
| Sample 9 | 2 | 23 | 1 |
| Sample 10 | 2 | 40 | 2 |
| Sample 11 | 2 | 34 | 0 |
| Sample 12 | 2 | 68 | 7 |
| Sample 13 | 1 | Measurement failed, > 200 | - |
| Sample 14 | 1 | Measurement failed, > 200 | - |
| Sample 14 † | 2 | 672 | 243 |
| † Measurement was done with a lower oxygen concentration. | | | |

The data provided in Table 23 illustrates that the multilayer coatings of Samples 8, 13, and 14 are not effective as oxygen barrier layers as compared with the multilayer coatings of Samples 9-12. In comparing the multilayer coating of Sample 14 to the multilayer coatings of Samples 10 and 12, the biopolymer layers that included both starch and clay (Samples 10 and 12) have superior oxygen barrier properties, indicating that the presence of clay improves the oxygen barrier properties of the multilayer coating. In addition, the multilayer coating of Samples 8-15 have good flexibility as shown by their performance in the Hot Oil Circle test discussed above.

**Claims**

**1.** A coated paper or paperboard, comprising:

a base paper having a first major surface;
a multilayer coating over the first major surface having a total dry coat weight of 10 g/$m^2$ or less, where the multilayer coating includes:

a first water vapor barrier layer formed with a latex;

a biopolymer barrier layer on the first water vapor barrier layer, the biopolymer barrier layer having a total dry coat weight of 4 g/m$^2$ or less; and
a second water vapor barrier layer on the biopolymer barrier layer, where the second water vapor barrier layer is formed with a latex.

2.  The coated paper or paperboard of claim 1, where the biopolymer barrier layer includes:

a biopolymer;

2.5 to 50 weight parts of a plasticizer for every 100 dry weight parts of biopolymer; and
10 to 100 weight parts of a pigment for every 100 dry weight parts of biopolymer.

3.  The coated paper or paperboard of claim 2, where the biopolymer is selected from the group consisting of a starch, a modified starch, a chitosan, a polysaccharide, a protein, a gelatin, a bio-polyester and modifications and mixtures thereof.

4.  The coated paper or paperboard of claim 2, where the pigment is selected from the group consisting of a clay, an exfoliated natural layered silicate, a partially exfoliated natural layered silicate, an exfoliated synthetic layered silicate, a partially exfoliated synthetic layered silicate, calcium carbonates, talc and mixtures thereof.

5.  The coated paper or paperboard of any one of claims 2-4, where the plasticizer is an ethylene-acrylic acid copolymer.

6.  The coated paper or paperboard of any one of the preceding claims, where the biopolymer barrier layer includes a first biopolymer barrier layer on the first water vapor barrier layer and a second biopolymer barrier layer on the first biopolymer barrier layer so that the first biopolymer barrier layer and the second biopolymer barrier layer are between the first water vapor barrier layer and the second water vapor barrier layer.

7.  The coated paper or paperboard of claim 6, where each of the first biopolymer barrier layer and the second biopolymer barrier layer have a dry coat weight of 2 g/m$^2$ or less.

8.  The coated paper or paper board of any one of the preceding claims, where the first water vapor barrier layer and the second water vapor barrier layer has a combined dry coat weight of 6 g/m$^2$ or less.

9.  The coated paper or paper board of any one of the preceding claims, where the coated paper or paper board has an oxygen permeability of not higher than 100 cm$^3$/(m$^2$*24 hours) at 23 °C, 760 mmHg, and 50% relative humidity.

10. The coated paper or paperboard of any one of the preceding claims, where the multilayer coating of the coated paper or paperboard prevents penetration of canola oil at 60 °C for 24 hours through the multilayer coating and the base paper after creasing and folding.

11. The coated paper or paper board of any one of the preceding claims, where the coated paper or paper board has a Kit Rating Number of at least 12.

12. A method of forming a coated paper or paper board, comprising:

simultaneously applying a multilayer coating to a first major surface of a base paper, where the multilayer coating includes:

a first water vapor barrier layer and a second water vapor barrier layer, where each of the first water vapor barrier layer and the second water vapor barrier layer are formed from a first coating composition that is formed with a latex;
at least one biopolymer barrier layer, where each of the at least one biopolymer barrier layer is formed from a second coating composition that includes:

a biopolymer;

2.5 to 50 weight parts of a plasticizer for every 100 dry weight parts of biopolymer; and
10 to 100 weight parts of a pigment for every 100 dry weight parts of biopolymer;

where the at least one biopolymer barrier layer is positioned between the first and second water vapor barrier layers; and

drying the multilayer coating on the first major surface of the base paper.

13. The method of claim 12, where simultaneously applying a multilayer coating includes applying the first and second water vapor barrier layers and at least one biopolymer barrier layer to form the multilayer coating having a total dry coat weight of 10 g/m$^2$ or less.

14. The method of claim 13, where simultaneously applying a multilayer coating includes applying at least one biopolymer barrier layer to form a biopolymer barrier layer having a coat weigh of 4 g/m$^2$ or less.

15. The method of any one of claims 12-14, where simultaneously applying a multilayer coating includes applying each of the first and second water vapor barrier layers to form the first barrier layer having a coat weigh of 3 g/m$^2$ or less, and to form the second water vapor barrier layer having a coat weigh of 3 g/m$^2$ or less.

**Patentansprüche**

1. Ein beschichtetes Papier oder eine beschichtete Pappe, beinhaltend:

ein Rohpapier mit einer ersten Hauptoberfläche;
eine mehrschichtige Beschichtung über der ersten Hauptoberfläche mit einem Gesamttrockenstrichgewicht von 10 g/m$^2$ oder weniger, wobei die mehrschichtige Beschichtung Folgendes umfasst:

eine erste Wasserdampfsperrschicht, die mit einem Latex gebildet ist;
eine Biopolymersperrschicht auf der ersten Wasserdampfsperrschicht, wobei die Biopolymersperrschicht ein Gesamttrockenstrichgewicht von 4 g/m$^2$ oder weniger aufweist; und
eine zweite Wasserdampfsperrschicht auf der Biopolymersperrschicht, wobei die zweite Wasserdampfsperrschicht mit einem Latex gebildet ist.

2. Beschichtetes Papier oder beschichtete Pappe gemäß Anspruch 1, wobei die Biopolymersperrschicht Folgendes umfasst:

ein Biopolymer;

2,5 bis 50 Gewichtsteile eines Weichmachers je 100 Trockengewichtsteile Biopolymer; und
10 bis 100 Gewichtsteile eines Pigments je 100 Trockengewichtsteile Biopolymer.

3. Beschichtetes Papier oder beschichtete Pappe gemäß Anspruch 2, wobei das Biopolymer aus der Gruppe ausgewählt ist, die aus einer Stärke, einer modifizierten Stärke, einem Chitosan, einem Polysaccharid, einem Protein, einer Gelatine, einem Biopolyester und Abwandlungen und Mischungen davon besteht.

4. Beschichtetes Papier oder beschichtete Pappe gemäß Anspruch 2, wobei das Pigment aus der Gruppe ausgewählt ist, die aus einem Ton, einem exfolierten natürlichen geschichteten Silicat, einem teilweise exfolierten natürlichen geschichteten Silicat, einem exfolierten synthetischen geschichteten Silicat, einem teilweise exfolierten synthetischen geschichteten Silicat, Calciumcarbonaten, Talk und Mischungen davon besteht.

5. Beschichtetes Papier oder beschichtete Pappe gemäß einem der Ansprüche 2-4, wobei der Weichmacher ein Ethylen-Acrylsäure-Copolymer ist.

6. Beschichtetes Papier oder beschichtete Pappe gemäß einem der vorhergehenden Ansprüche, wobei die Biopolymersperrschicht eine erste Biopolymersperrschicht auf der ersten Wasserdampfsperrschicht und eine zweite Biopolymersperrschicht auf der ersten Biopolymersperrschicht umfasst, so dass die erste Biopolymersperrschicht und die zweite Biopolymersperrschicht zwischen der ersten Wasserdampfsperrschicht und der zweiten Wasserdampfsperrschicht liegen.

7. Beschichtetes Papier oder beschichtete Pappe gemäß Anspruch 6, wobei jede von der ersten Biopolymersperrschicht und der zweiten Biopolymersperrschicht ein Trockenstrichgewicht von 2 g/m$^2$ oder weniger aufweist.

8. Beschichtetes Papier oder beschichtete Pappe gemäß einem der vorhergehenden Ansprüche, wobei die erste Wasserdampfsperrschicht und die zweite Wasserdampfsperrschicht ein kombiniertes Trockenstrichgewicht von 6 g/m$^2$ oder weniger aufweisen.

9. Beschichtetes Papier oder beschichtete Pappe gemäß einem der vorhergehenden Ansprüche, wobei das beschichtete Papier oder die beschichtete Pappe eine Sauerstoffdurchlässigkeit von nicht mehr als 100 cm$^3$/(m$^2$ * 24 Stunden) bei 23 °C, 760 mmHg und 50 % relativer Feuchtigkeit aufweist.

10. Beschichtetes Papier oder beschichtete Pappe gemäß einem der vorhergehenden Ansprüche, wobei die mehrschichtige Beschichtung des beschichteten Papiers oder der beschichteten Pappe ein Durchdringen von Rapsöl bei 60 °C für 24 Stunden durch die mehrschichtige Beschichtung und das Rohpapier nach Rillenbildung und Faltung verhindert.

11. Beschichtetes Papier oder beschichtete Pappe gemäß einem der vorhergehenden Ansprüche, wobei das beschichtete Papier oder die beschichtete Pappe eine Kit-Klassifizierungsnummer von mindestens 12 aufweist.

12. Ein Verfahren zum Bilden eines beschichteten Papiers oder einer beschichteten Pappe, beinhaltend:

    gleichzeitiges Auftragen einer mehrschichtigen Beschichtung auf eine erste Hauptoberfläche eines Rohpapiers, wobei die mehrschichtige Beschichtung Folgendes umfasst:

    eine erste Wasserdampfsperrschicht und eine zweite Wasserdampfsperrschicht, wobei jede von der ersten Wasserdampfsperrschicht und der zweiten Wasserdampfsperrschicht aus einer ersten Beschichtungszusammensetzung gebildet ist, die mit einem Latex gebildet ist;
    mindestens eine Biopolymersperrschicht, wobei jede der mindestens einen Biopolymersperrschicht aus einer zweiten Beschichtungszusammensetzung gebildet ist, die Folgendes umfasst:

    ein Biopolymer;

    2,5 bis 50 Gewichtsteile eines Weichmachers je 100 Trockengewichtsteile Biopolymer; und
    10 bis 100 Gewichtsteile eines Pigments je 100 Trockengewichtsteile Biopolymer; wobei die mindestens eine Biopolymersperrschicht zwischen der ersten und
    zweiten Wasserdampfsperrschicht positioniert ist; und

    Trocknen der mehrschichtigen Beschichtung auf der ersten Hauptoberfläche des Rohpapiers.

13. Verfahren gemäß Anspruch 12, wobei das gleichzeitige Auftragen einer mehrschichtigen Beschichtung das Auftragen der ersten und zweiten Wasserdampfsperrschicht und mindestens einer Biopolymersperrschicht zum Bilden der mehrschichtigen Beschichtung mit einem Gesamttrockenstrichgewicht von 10 g/m$^2$ oder weniger umfasst.

14. Verfahren gemäß Anspruch 13, wobei das gleichzeitige Auftragen einer mehrschichtigen Beschichtung das Auftragen mindestens einer Biopolymersperrschicht zum Bilden einer Biopolymersperrschicht mit einem Strichgewicht von 4 g/m$^2$ oder weniger umfasst.

15. Verfahren gemäß einem der Ansprüche 12-14, wobei das gleichzeitige Auftragen einer mehrschichtigen Beschichtung das Auftragen jeder von der ersten und zweiten Wasserdampfsperrschicht zum Bilden der ersten Sperrschicht mit einem Strichgewicht von 3 g/m$^2$ oder weniger und zum Bilden der zweiten Wasserdampfsperrschicht mit einem Strichgewicht von 3 g/m$^2$ oder weniger umfasst.

**Revendications**

1. Un papier ou carton couché, comprenant :

    un papier support présentant une première surface principale ;
    un revêtement multicouche par-dessus la première surface principale présentant un poids de couche à sec total de 10 g/m$^2$ ou moins, où le revêtement multicouche inclut :

une première couche faisant barrière à la vapeur d'eau formée avec un latex ;
une couche faisant barrière en biopolymère sur la première couche faisant barrière à la vapeur d'eau, la couche faisant barrière en biopolymère présentant un poids de couche à sec total de 4 g/m$^2$ ou moins ; et
une deuxième couche faisant barrière à la vapeur d'eau sur la couche faisant barrière en biopolymère, où la deuxième couche faisant barrière à la vapeur d'eau est formée avec un latex.

2. Le papier ou carton couché de la revendication 1, où la couche faisant barrière en biopolymère inclut :

un biopolymère ;
de 2,5 à 50 parties en poids d'un plastifiant pour chaque 100 parties en poids à sec de biopolymère ; et
de 10 à 100 parties en poids d'un pigment pour chaque 100 parties en poids à sec de biopolymère.

3. Le papier ou carton couché de la revendication 2, où le biopolymère est sélectionné parmi le groupe constitué d'un amidon, d'un amidon modifié, d'un chitosan, d'un polysaccharide, d'une protéine, d'une gélatine, d'un bio-polyester et de modifications et de mélanges de ceux-ci.

4. Le papier ou carton couché de la revendication 2, où le pigment est sélectionné parmi le groupe constitué d'une argile, d'un phillosilicate naturel exfolié, d'un phillosilicate naturel partiellement exfolié, d'un phillosilicate synthétique exfolié, d'un phillosilicate synthétique partiellement exfolié, de carbonates de calcium, de talc et de mélanges de ceux-ci.

5. Le papier ou carton couché de l'une quelconque des revendications 2 à 4, où le plastifiant est un copolymère d'éthylène-acide acrylique.

6. Le papier ou carton couché de l'une quelconque des revendications précédentes, où la couche faisant barrière en biopolymère inclut une première couche faisant barrière en biopolymère sur la première couche faisant barrière à la vapeur d'eau et une deuxième couche faisant barrière en biopolymère sur la première couche faisant barrière en biopolymère de sorte que la première couche faisant barrière en biopolymère et la deuxième couche faisant barrière en biopolymère se situent entre la première couche faisant barrière à la vapeur d'eau et la deuxième couche faisant barrière à la vapeur d'eau.

7. Le papier ou carton couché de la revendication 6, où chacune de la première couche faisant barrière en biopolymère et de la deuxième couche faisant barrière en biopolymère présentent un poids de couche à sec de 2 g/m$^2$ ou moins.

8. Le papier ou carton couché de l'une quelconque des revendications précédentes, où la première couche faisant barrière à la vapeur d'eau et la deuxième couche faisant barrière à la vapeur d'eau présentent un poids de couche à sec combiné de 6 g/m$^2$ ou moins.

9. Le papier ou carton couché de l'une quelconque des revendications précédentes, où le papier ou carton couché présente une perméabilité à l'oxygène ne dépassant pas 100 cm$^3$/(m$^2$ * 24 heures) à 23 °C, 760 mmHg, et 50 % d'humidité relative.

10. Le papier ou carton couché de l'une quelconque des revendications précédentes, où le revêtement multicouche du papier ou carton couché empêche la pénétration d'huile de colza à 60 °C pendant 24 heures à travers le revêtement multicouche et le papier support après rainurage et pliage.

11. Le papier ou carton couché de l'une quelconque des revendications précédentes, où le papier ou carton couché présente un numéro de degré Kit d'au moins 12.

12. Une méthode destinée à former un papier ou carton couché, comprenant :

l'application simultanée d'un revêtement multicouche sur une première surface principale d'un papier support, où le revêtement multicouche inclut :

une première couche faisant barrière à la vapeur d'eau et une deuxième couche faisant barrière à la vapeur d'eau, où la première couche faisant barrière à la vapeur d'eau et la deuxième couche faisant barrière à la vapeur d'eau sont chacune formées à partir d'une première composition de revêtement qui est formée avec un latex ;

au moins une couche faisant barrière en biopolymère, où cette ou ces au moins couches faisant barrière en biopolymère sont chacunes formées à partir d'une deuxième composition de revêtement qui inclut :

un biopolymère ;
de 2,5 à 50 parties en poids d'un plastifiant pour chaque 100 parties en poids à sec de biopolymère ; et
de 10 à 100 parties en poids d'un pigment pour chaque 100 parties en poids à sec de biopolymère ;

où cette au moins une couche faisant barrière en biopolymère est positionnée entre la première et la deuxième couches faisant barrière ; et

le séchage du revêtement multicouche sur la première surface principale du papier support.

13. La méthode de la revendication 12, où l'application simultanée d'un revêtement multicouche inclut l'application de la première et de la deuxième couches faisant barrière à la vapeur et au moins une couche faisant barrière en biopolymère pour former le revêtement multicouche présentant un poids de couche à sec total de 10 g/m$^2$ ou moins.

14. La méthode de la revendication 13, où l'application simultanée d'un revêtement multicouche inclut l'application d'au moins une couche faisant barrière en biopolymère pour former une couche faisant barrière en biopolymère présentant un poids de couche de 4 g/m$^2$ ou moins.

15. La méthode de l'une quelconque des revendications 12 à 14, où l'application simultanée d'un revêtement multicouche inclut l'application de chacune de la première et de la deuxième couches faisant barrière à la vapeur d'eau pour former la première couche faisant barrière présentant un poids de couche de 3 g/m$^2$ ou moins, et pour former la deuxième couche faisant barrière à la vapeur d'eau présentant un poids de couche de 3 g/m$^2$ ou moins.

*Fig. 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005039871 A
- US 2004121079 A
- WO 2004035929 A
- US 20030188839 A
- US 20040121080 A
- US 4468498 A
- US 6896905 B
- WO 2005090427 A
- US 376835 A

**Non-patent literature cited in the description**

- Praktikumsversuch Nr. 2: Stanzen, Rillen, und Falten von Faltschachtel Karton. *Prof. Hofer of Univerisity of Applied Science*